# DEMANDE DE BREVET EUROPEEN

(11) **EP 0 895 177 A1**
(43) Date de publication de la demande: **03.02.1999**
(21) Numéro de dépôt: 98390008.5
(22) Date de dépôt: 07.07.1998
(51) Int. Cl.: G06K 7/10

(54) **Procédé pour le paramétrage de lecteurs de codes imprimés à une ou deux dimensions**

(30) Priorité: 29.07.1997 FR 9709757
(71) Demandeur: INTERMEC SCANNER TECHNOLOGY CENTER, 31670 Labege Cédex (FR)
(72) Inventeur: Thuries, Serge, 31240 Saint Jean (FR); Massieu, Jean-Louis, 82000 Montauban (FR)
(74) Mandataire: Cabinet BARRE LAFORGUE & associés

(57) **Abrégé**

L'invention concerne un procédé de paramétrage de lecteurs de codes imprimés selon lequel, dans une phase préalable, on choisit une symbologie d'encodage dans laquelle on définit des chaînes de caractères représentatives de commandes de paramétrages et de paramètres affectés aux dites commandes, on mémorise ces chaînes de caractères et on établit un menu d'affichage des diverses options proposées pour chaque commande et des diverses valeurs de paramètres. Selon ce procédé, en outre, lors du paramétrage d'un lecteur, après sélection des diverses commandes et paramètres, on regroupe les chaînes de caractères sélectionnées en au moins une séquence de chaînes de caractères de longueur au plus égale à celle de la plage de lecture des lecteurs, on transforme chacune desdites séquences de façon à obtenir le symbole graphique correspondant, on édite une carte comportant chacun desdits symboles, et on lit au moyen des lecteurs chacun de ces symboles.

## Description

L'invention vise un procédé de paramétrage de lecteurs de codes imprimés à une dimension du type code à barres, ou à deux dimensions du type code matriciel, UPSCODE, PDF417..., destiné à adapter lesdits lecteurs à des conditions de travail prédéterminées.

A l'heure actuelle, le paramétrage de lecteurs de codes imprimés est habituellement réalisé au moyen de manuels d'installation comportant, pour chaque donnée à formater (environnement du lecteur, paramètres de transmission, paramètres de symbologie, paramètres de fonctionnement...), une pluralité de codes de configuration correspondant chacun à une option prédéfinie de type courant. De plus, ces manuels incorporent des codes correspondant chacun, soit à un chiffre, soit à une lettre permettant, d'une part, de composer des codes de configuration spécifiques non prévus dans lesdits manuels et, d'autre part, d'intégrer des chaînes de caractères dans les données transmises par le lecteur.

Le paramétrage, proprement dit, consiste, pour chaque lecteur et pour chaque donnée à formater, à lire au moyen dudit lecteur le code correspondant à l'option choisie, ou à composer également par lecture des codes de configuration spécifiques, et à éventuellement composer, toujours par lecture, des chaînes de caractères associées aux données formatées.

Une telle technique présente deux inconvénients majeurs. En premier lieu, le mode d'acquisition des données à formater s'avère conduire à des temps d'installation très longs et nécessite en outre d'être répété pour chaque lecteur à installer même si les données à formater sont identiques pour les divers lecteurs.

De plus, il ne subsiste, après installation, aucune trace matérielle du type de données affectées, de sorte que tout incident de fonctionnement conduit à imposer une nouvelle procédure complète de paramétrage nécessitant de retrouver et de vérifier l'ensemble des données à affecter.

Il existe également, en vue du paramétrage de lecteurs de codes imprimés, des techniques de clonage qui présentent toutefois l'inconvénient de nécessiter des commandes spéciales et des interfaces spécifiques.

Enfin une dernière technique consiste à utiliser un logiciel de paramétrage qui permet de télécharger les données de paramétrage, et donc de conserver ces données sous forme de fichiers dans le dispositif de téléchargement. Toutefois, d'une part tout paramétrage d'un lecteur nécessite de le relier physiquement au dispositif de téléchargement. De plus, l'évolution technique constante dans le domaine informatique conduit à des remplacements fréquents de matériel de sorte qu'il arrive souvent que le dispositif de téléchargement utilisé initialement, et donc les fichiers créés, n'existent plus lorsque un nouveau paramétrage est nécessaire.

La présente invention vise à pallier ces inconvénients et a pour objectif essentiel de fournir un procédé de paramétrage de lecteurs de codes imprimés permettant un paramétrage rapide desdits lecteurs, pouvant être répété aisément de façon illimitée.

A cet effet, l'invention vise un procédé de paramétrage d'un lecteur de codes imprimés, consistant :
- dans une phase préalable :
   . à choisir une symbologie d'encodage de caractères et à définir dans ladite symbologie une pluralité de chaînes de caractères représentatives de commandes de paramétrage et de paramètres affectés auxdites commandes,
   . à mémoriser l'ensemble des chaînes de caractères,
   . et à établir un menu d'affichage des diverses options proposées pour chaque commande, et des diverses valeurs proposées pour chaque paramètre,
- et lors du paramétrage d'un lecteur de codes à barres déterminé :
   - à sélectionner, pour chaque commande de paramétrage, et chaque paramètre éventuellement affecté à ladite commande, la commande et le paramètre adéquats,

   . à regrouper l'ensemble des chaînes de caractères sélectionnées, représentatives des commandes de paramétrage et des paramètres éventuellement affectés, en au moins une séquence de chaînes de caractères, de longueur maximale au plus égale à la longueur de la plage de lecture du lecteur,
   . à transformer chaque séquence de chaînes de caractères de façon à obtenir un symbole graphique correspondant,
   . à éditer une carte comportant chaque symbole graphique obtenu,
   . et à lire, au moyen du lecteur, chaque symbole graphique de façon à mémoriser l'ensemble des commandes de paramétrage et des paramètres éventuellement affectés.

(Il est à noter que, selon l'invention, on entend définir par lecteur de codes imprimés, tout type de lecteurs, c'est-à-dire soit des dispositifs terminaux conçus spécifiquement pour l'identification de codes, soit des dispositifs intermédiaires d'acquisition de symboles de configuration d'un appareil, tel que par exemple une imprimante, configurable à partir desdits symboles).

Un tel procédé conduit à obtenir une carte de configuration réutilisable à volonté sans nécessiter de moyens de stockage particuliers, permettant aisément de paramétrer un ou plusieurs lecteur(s) identique(s), et de réaliser rapidement une nouvelle procédure de paramétrage, sans risque d'erreur, en cas d'incident ultérieur de fonctionnement desdits lecteurs.

De plus, selon ce procédé, le (ou les) symbole(s) graphique(s) édité(s) sont compactés de façon optimale, du fait notamment que les chaînes de caractères sont regroupées en séquences dont le nombre est seulement fonction de la longueur maximale de la plage de lecture du lecteur. De ce fait, le paramétrage d'un lecteur ne nécessite la lecture que d'un nombre limité, voire d'un seul, codes imprimés.

Selon une autre caractéristique de l'invention :
- dans la phase préalable, on définit dans la symbologie d'encodage une fonction mathématique de contrôle des chaînes de caractères,
- et lors du paramétrage, on calcule pour chaque séquence de caractères, et au moyen de la fonction mathématique de contrôle, un caractère de contrôle représentatif de l'ensemble des caractères de ladite séquence, et on affecte le caractère de contrôle calculé à chaque séquence de chaînes de caractères.

Selon une autre caractéristique de l'invention, on affecte, à chaque séquence de chaînes de caractères, un caractère final d'identification de la fonction de configuration.

Un tel caractère final permet, en effet, au lecteur d'identifier que le code lu est un code de configuration, et évite donc d'avoir à commuter ledit lecteur en mode programmation.

Selon un mode de mise en oeuvre préférentiel, on utilise comme symbologie d'encodage le jeu B du code 128.

En outre, dans ce cas, on utilise avantageusement comme caractère final d'identification le caractère FNC3 dudit jeu B du code 128.

Selon une autre caractéristique de l'invention, et dans la phase préalable, on transforme chaque chaîne de caractères en valeurs binaires, et on mémorise l'ensemble des valeurs binaires.

De plus, on transforme avantageusement chaque chaîne de caractères en valeurs binaires en affectant un bit de reconnaissance desdites chaînes de caractères représentatives des commandes et un bit de reconnaissance desdites chaînes de caractères représentatives des paramètres.

En outre, chaque valeur binaire est préférentiellement codée en valeur hexadécimale.

Selon des modes de réalisation préférentiels :
- on code chaque valeur binaire représentative d'une commande en base 32 en affectant à ladite valeur un bit de reconnaissance de poids fort.
- on code chaque valeur binaire représentative d'un paramètre en base 64 en affectant à ladite valeur un bit de reconnaissance de poids faible.

De plus, on définit préférentiellement dans la symbologie d'encodage du jeu B du code 128, des paramètres représentatifs de caractères ASCII en sélectionnant :
- pour les 31 premiers caractères ASCII, les 31 premiers codes du jeu B du code 128, affectés d'un caractère initial de reconnaissance,
- pour les caractères ASCII du 32° au 95°, les 63 premiers codes du jeu B du code 128,
- et pour les caractères ASCII du 96° au 127°, les codes 32 à 63 du jeu B du code 128, affectés d'un caractère initial de reconnaissance.

D'autres caractéristiques, buts et avantages de l'invention ressortiront de la description détaillée qui suit en référence aux dessins annexés qui font partie intégrante de la présente description, et sur lesquels :
- la figure 1 représente la symbologie du code 128,
- la figure 2 représente un exemple d'un ensemble de codes de configuration tels qu'actuellement nécessaires pour le paramétrage d'un lecteur,
- et la figure 3 représente un exemple de carte de configuration d'un lecteur obtenue selon le procédé conforme à l'invention, comportant un seul code incorporant tous les codes de configuration de la figure 2.

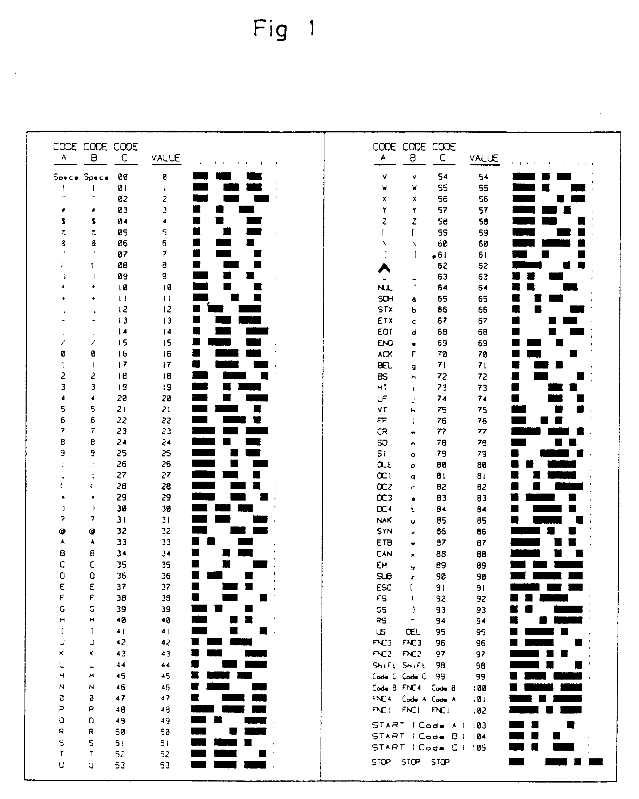

Le procédé selon l'invention consiste à encoder les commandes de paramétrage et les paramètres éventuellement affectés à ces commandes en utilisant comme symbologie d'encodage le jeu B du code 128 représenté à la figure 1.

De plus, toutes ces valeurs sont mémorisées en valeurs binaires codées en valeurs hexadécimales.

En premier lieu, les commandes de paramétrage, destinées à commander une ou plusieurs actions simples (sélection et désélection de codes...) sont codées en base 32 avec un bit 1 de poids fort.

Ainsi codé, on dispose de 32 codes différents dont les valeurs exprimées en base 32, en décimale, s'étendent entre 64 et 95, correspondant aux symboles des valeurs équivalentes du code B du jeu 128, et dont les valeurs exprimées en base 32, en hexadécimal, s'étendent entre 40 et 5 F.

Ce nombre de codes étant insuffisant, les commandes de paramétrage seront donc encodées sur 1 ou 2 caractères : 1 seul caractère pour les 32 premiers codes, et 2 caractères pour les codes suivants. A titre d'exemple, le code de paramétrage d'ordre 31 correspond ainsi à la valeur 95 (valeur décimale en base 32) du jeu B du code 128 et est encodé sous la valeur 5 F en hexadécimal en base 32. Le code de paramétrage d'ordre 100 correspond, quant à lui, aux valeurs 67, 68 (valeur décimale en base 32) du jeu B du code 128 et est encodé sous la valeur 43, 44 en hexadécimal en base 32.

Les paramètres sont, quant à eux, scindés en deux types de paramètres représentant :
- soit des valeurs numériques (délai avant mise en veille, longueurs de codes...) s'initialisant par une valeur entière, de 0 à 255 pour un octet, et de 0 à 65535 pour deux octets,
- soit des caractères ASCII permettant essentiellement de former des chaînes de caractères (préambules, postambules, code Mark...), et s'initialisant pour chaque octet par une valeur de 0 à 255.

Ces paramètres sont codés en base 64 avec un bit 1 de poids faible afin de les différencier des commandes de paramétrage.

En premier lieu, les paramètres de valeurs numériques sont encodés :
- sur un caractère pour les valeurs décimales en base 10 de O à 63, dont les valeurs exprimées en base 64, en décimale, correspondent aux symboles de valeurs équivalentes du code B du jeu 128, et dont les valeurs exprimées en base 64, en hexadécimal, s'étendent entre 0 et 3 F.
- sur deux ou plusieurs caractères pour les valeurs décimales supérieures à 63, correspondant chacun à un des 64 premiers symboles du code B du jeu 128, chacun desdits caractères présentant une valeur exprimée en base 64, en hexadécimal, comprise entre 0 et 3 F.

A titre d'exemple, le chiffre 5 en décimale en base 10, correspond ainsi à la valeur 5 (valeur décimale en base 64) du code B du jeu 128, et est encodé sous la valeur 5 en hexadécimal en base 64.

Le chiffre 255 (en décimale en base 10) est quant à lui encodé sur deux caractères. Il correspond aux valeurs respectives 3 et 63 (valeurs décimales en base 64) du code B du jeu 128, et est encodé sous la valeur 3, 3 F en hexadécimal en base 64.

Les paramètres représentatifs de caractères ASCII sont destinés à initialiser des chaînes ASCII, et de ce fait chaque caractère contenu dans le jeu B du code 128 constitue un caractère de cette chaîne ASCII. En fonction de la valeur du caractère ASCII, différents encodages sont imposés :
- aux 31 premiers caractères ASCII correspondent les 31 premiers symboles du code B du jeu 128, encodés sous les valeurs 0 à 1 F en hexadécimal en base 64. De plus, ces caractères sont affectés d'un caractère initial de reconnaissance, en l'occurrence correspondant au symbole de valeur 62 du jeu B du code 128 encodé sous la valeur 3 E en hexadécimal en base 64,
- aux caractères ASCII du 32° à 95° correspondent les 63 premiers symboles du code B du jeu 128, encodés sous les valeurs 20 à 5 F en hexadécimal en base 64,
- aux caractères ASCII du 96° au 128° correspondent les symboles de valeurs 32 à 63 du code B du jeu 128, encodés sous les valeurs 60 à 7 F en hexadécimal en base 64. De plus, ces caractères sont affectés d'un caractère initial de reconnaissance, en l'occurrence correspondant au symbole de la valeur 32 du jeu B du code 128, encodé sous la valeur 20 en hexadécimal en base 64.

En outre, compte tenu de l'utilisation de deux caractères de reconnaissance, ces deux caractères sont doublés lors de leur encodage en vue de permettre leur identification.

Par ailleurs, des paramètres spécifiques peuvent également être mémorisés en affectant à ces derniers un caractère initial de reconnaissance, ces paramètres étant par exemple destinés à :
- la gestion des touches de claviers (déplacements gauche, droite, haut, bas... touches de fonction),
- dédier une ou plusieurs commandes à un lecteur identifié par un paramètre.

Une fois l'ensemble des commandes de paramétrage et les éventuels paramètres affectés définis, le procédé selon l'invention consiste à mémoriser ces données et à organiser un menu d'affichage des diverses options pour chaque commande mémorisé, et des diverses valeurs des paramètres éventuellement affectés à ces commandes.

Lors du paramétrage proprement dit, l'utilisateur sélectionne pour chaque commande de paramétrage et pour chaque paramètre éventuellement affecté à cette commande, la commande et le paramètre adéquats, conduisant à l'obtention d'une pluralité de chaînes de caractères correspondantes.

Selon l'invention, ces chaînes de caractères sont ensuite regroupées en au moins une séquence de chaînes de caractères puis :
- on affecte à chaque séquence de chaînes de caractères, un caractère initial représentatif du jeu B du code 128 (caractère START B dudit code),
- on calcule le caractère de contrôle selon la fonction mathématique associée au code 128, et l'on affecte chaque séquence dudit caractère de contrôle,
- on affecte à chaque séquence de chaînes de caractères un caractère final d'identification par le lecteur du mode de configuration (caractère FNC3 du jeu B du code 123),
- on transforme chaque séquence de chaînes de caractères de façon à obtenir un symbole graphique correspondant,
- on édite, par exemple sur imprimante, une carte comportant chaque symbole graphique obtenu.

Une telle carte, sur laquelle chaque symbole graphique est compacté de façon optimale, présente, en outre, l'avantage de fournir un support réutilisable à volonté permettant le paramétrage de lecteurs par simple lecture du (ou des) symbole(s) édité(s).

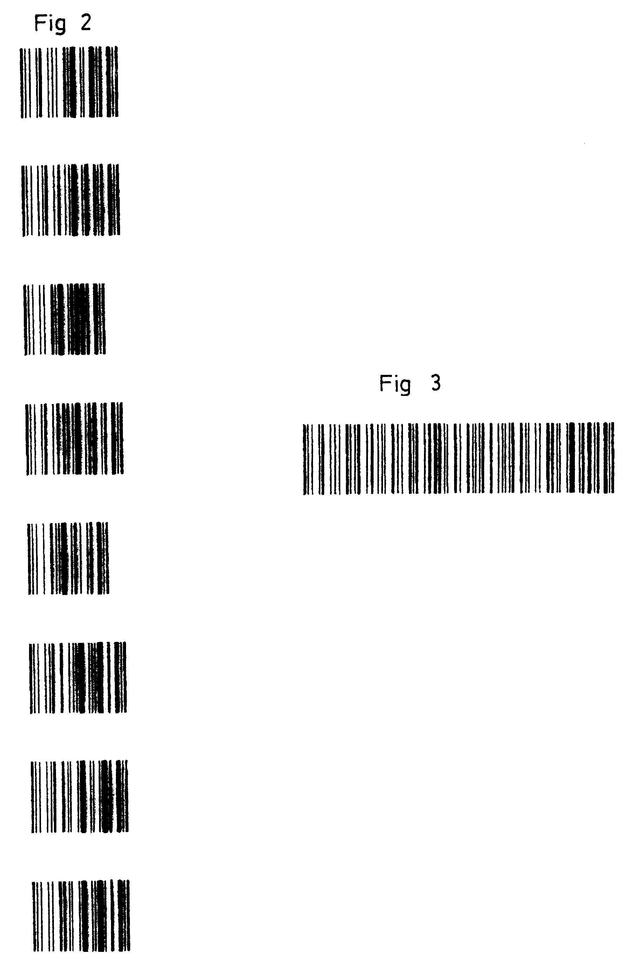

A titre d'exemple, la figure 2 représente un ensemble de codes de configuration tels qu'actuellement nécessaires pour le paramétrage d'un type donné de lecteurs, et la figure 3 représente la carte de paramétrage obtenue selon le procédé conforme à l'invention, qui ne comporte qu'un seul code de configuration compacté regroupant toutes les données de paramétrage représentées à la figure 2.

## Revendications

1. Procédé pour le paramétrage de lecteurs de codes imprimés de type donné, notamment à une dimension du type code à barres ou à deux dimensions, en vue de l'adapter à des conditions de travail prédéterminées, caractérisé en ce qu'il consiste :
- dans une phase préalable :
. à choisir une symbologie d'encodage de caractères et à définir dans ladite symbologie une pluralité de chaînes de caractères représentatives de commandes de paramétrage et de paramètres affectés auxdites commandes,
. à mémoriser l'ensemble des chaînes de caractères,
. et à établir un menu d'affichage des diverses options proposées pour chaque commande, et des diverses valeurs proposées pour chaque paramètre,
- et lors du paramétrage d'un lecteur de codes à barres déterminé :
- à sélectionner, pour chaque commande de paramétrage et chaque paramètre éventuellement affecté à ladite commande, la commande et le paramètre adéquats,
. à regrouper l'ensemble des chaînes de caractères sélectionnées, représentatives des commandes de paramétrage et des paramètres éventuellement affectés, en au moins une séquence de chaînes de caractères, de longueur maximale au plus égale à la longueur de la plage de lecture du lecteur.
. à transformer chaque séquence de chaînes de caractères de façon à obtenir un symbole graphique correspondant,
. à éditer une carte comportant chaque symbole graphique obtenu,
. et à lire, au moyen du lecteur, chaque symbole graphique de façon à mémoriser l'ensemble des commandes de paramétrage et des paramètres éventuellement affectés.

2. Procédé de paramétrage selon la revendication 1 caractérisé en ce que :
- dans la phase préalable, on définit dans la symbologie d'encodage une fonction mathématique de contrôle des chaînes de caractères,
- et lors du paramétrage, on calcule pour chaque séquence de caractères, et au moyen de la fonction mathématique de contrôle, un caractère de contrôle représentatif de l'ensemble des caractères de ladite séquence, et on affecte le caractère de contrôle calculé à chaque séquence de chaînes de caractères.

3. Procédé de paramétrage selon l'une des revendications 1 ou 2, caractérisé en ce que l'on affecte, à chaque séquence de chaînes de caractères, un caractère final d'identification de la fonction de configuration.

4. Procédé de paramétrage selon l'une des revendications 1 à 3, caractérisé en ce que l'on utilise comme symbologie d'encodage le jeu B du code 128.

5. Procédé de paramétrage selon les revendications 3 et 4 prises ensemble, caractérisé en ce que l'on utilise comme caractère final d'identification le caractère FNC3 du jeu B du code 128.

6. Procédé de paramétrage selon l'une des revendications 1 à 5, caractérisé en ce que, dans la phase préalable, on transforme chaque chaîne de caractères en valeurs binaires et en ce que l'on mémorise l'ensemble des valeurs binaires.

7. Procédé de paramétrage selon la revendication 6, caractérisé en ce que l'on transforme chaque chaîne de caractères en valeurs binaires en affectant un bit de reconnaissance desdites chaînes de caractères représentatives des commandes et un bit de reconnaissance desdites chaînes de caractères représentatives des paramètres.

8. Procédé de paramétrage selon la revendication 7, caractérisé en ce que l'on code chaque valeur binaire en valeur hexadécimale.

9. Procédé de paramétrage selon la revendication 8, caractérisé en ce que l'on code chaque valeur binaire représentative d'une commande en base 32 en affectant à ladite valeur un bit de reconnaissance de poids fort.

10. Procédé de paramétrage selon l'une des revendications 8 ou 9, caractérisé en ce que l'on code chaque valeur binaire représentative d'un paramètre en base 64 en affectant à ladite valeur un bit de reconnaissance de poids faible.

11. Procédé de paramétrage selon la revendication 4, caractérisé en ce que l'on définit dans la symbologie d'encodage du jeu B du code 128, des paramètres représentatifs de caractères ASCII en sélectionnant :
- pour les 31 premiers caractères ASCII, les 31 premiers codes du jeu B du code 128, affectés d'un caractère de reconnaissance,
- pour les caractères ASCII du 32° au 95°, les 63 premiers codes du jeu B du code 128,
- et pour les caractères ASCII du 96° au 127°, les codes 32 à 63 du jeu B du code 128, affectés d'un caractère de reconnaissance.
